# EUROPÄISCHE PATENTSCHRIFT

(11) **EP 2 189 054 B1**
(45) Veröffentlichungstag und Bekanntmachung des Hinweises auf die Patenterteilung: **14.12.2011**
(21) Anmeldenummer: 09168365.6
(22) Anmeldetag: 21.08.2009
(51) Int. Cl.: A01D 34/86

(54) **Mähvorrichtung**
Mowing device
Dispositif de tonte

(30) Priorität: 20.11.2008 DE 202008013786 U
(43) Veröffentlichungstag der Anmeldung: 26.05.2010
(73) Patentinhaber: Bawi-tec GmbH, 49626 Berge (DE)
(72) Erfinder: Barlage, Wilfried, 49626, Berge (DE)
(74) Vertreter: Bossmeyer, Jörg Peter

(56) Entgegenhaltungen:
- EP-A1- 1 709 857
- DE-U1- 20 320 492
- DE-U1-202006 018 350
- DE-U1-202007 015 645
- US-A- 2 838 901
- US-A- 3 397 521

## Beschreibung

Die Erfindung betrifft eine Mähvorrichtung mit einem an einem Fahrzeug anbringbaren oder angebrachten Ausleger, einem an dem Ausleger um eine Schwenkachse schwenkbar gelagerten und mehrere Arme umfassenden Träger, an denen mehrere Schneidwerkzeuge befestigt sind, wobei zwischen zwei vorderen der Schneidwerkzeuge ein Freiraum vorgesehen ist, in den ein bodenfestes Hindernis einlaufen kann, wenigsten einem Antrieb, mittels welchem die Schneidwerkzeuge angetrieben werden oder werden können, und einer im Bereich der Schwenkachse und in Mährichtung hinter einem ersten der vorderen Schneidwerkzeuge angeordneten Bodenabstützung, mittels welcher der Ausleger am Boden abgestützt ist oder werden kann.

Die DE 20 2006 006 420 U1 offenbart ein Mähgerät zum Freischneiden von Hindernissen an Straßenrändern, das die überstehenden Hindernisse weitgehend umgreift und dabei den umstehenden Bewuchs abschneidet. Das Mähgerät arbeitet in Arbeitsposition rechtsseitig neben dem Fahrzeug, wobei der Ausleger den Anbaurahmen quer zur Fahrtrichtung verlängert und nahezu waagerecht bzw. parallel zum Boden ausgerichtet ist und sowohl im Heckanbau eines Fahrzeugs als auch im Frontanbau eines Fahrzeugs betrieben und auf öffentlichen Straßen transportiert werden kann. Das Zwischengelenk ist mit dem Ausleger sowohl in Fahrtrichtung vor dem Anbaurahmen aus der Arbeitsposition in die Transportstellung als auch entgegengesetzt der Fahrtrichtung hinter dem Anbaurahmen aus der Arbeitsposition in die Transportstellung um die vertikale Schwenkachse schwenkbar.

Der Ausleger und der Anbaurahmen halten bei diesem Mähgerät die Schneidwerkzeuge im Abstand zum Boden und müssen daher sehr stabil ausgelegt sein, was mit hohen Fertigungs- und Materialkosten verbunden ist. Ferner kann ein Schwingen des Auslegers zu einer unerwünschten Abstandsänderung zwischen den Schneidwerkzeugen und dem Boden führen. Schließlich kann das Niveau des Bodens am Ort der Schneidwerkzeuge relativ zum Niveau des Bodens am Ort des Fahrzeugs variieren, sodass eine Anpassung des Abstands zwischen den Schneidwerkzeugen und dem Boden durch Schwenken des Auslegers durch die Bedienperson vorgenommen werden muss.

Die EP 1 709 857 A1 offenbart einen Pfosten-Freimäher zum Freimähen des Bereiches um ein Hindernis herum, mit zwei Mähvorrichtungen, die jeweils um eine aufrechte Achse rotieren und am freien Ende eines Tragarmes angeordnet sind, wobei die Tragarme um eine aufrechte Achse an einem Grundkörper schwenkbar angeordnet sind zwischen einer normalen Mähstellung ohne Kontakt mit dem Hindernis und wenigstens einer durch das Hindernis ausgelösten verschwenkten Mähstellung, einem die Mähvorrichtungen tragenden Arbeitsfahrzeug, wenigstens einem dem Freimäher zugeordneten Erfassungsmittel für das Hindernis und wenigstens einer Schwenkvorrichtung zum Verschwenken der Position der Tragarme relativ zum Grundkörper, wobei die Schwenkvorrichtungen die Tragarme unabhängig voneinander beaufschlagen und verschwenken können. Der Pfosten-Freimäher liegt mit einer Gleitkufe, die beispielsweise an einem weiter außen liegenden der Tragarme angeordnet ist, auf dem Untergrund auf.

Ist die Gleitkufe an einem der Tragarme angeordnet, so wird bei einem Schwenken des Tragarms die Gleitkufe auf einer Kreisbahn um die aufrechte Achse herum bewegt. Die Reibung zwischen der Gleitkufe und dem Untergrund erschwert dabei die Schwenkbewegung. Ferner kann durch die Reibung die Grasnarbe des Bodens beschädigt werden.

Ausgehend hiervon liegt der Erfindung die Aufgabe zugrunde, eine Mähvorrichtung der eingangs genannten Art derart weiterzubilden, dass die Reibung zwischen der Bodenabstützung und dem Boden bei einer Schwenkbewegung des Trägers reduziert werden kann.

Diese Aufgabe wird erfindungsgemäß mit einer Mähvorrichtung nach Anspruch 1 gelöst. Bevorzugte Weiterbildungen der Erfindung sind in den Unteransprüchen gegeben.

Die erfindungsgemäße Mähvorrichtung, insbesondere zum Mähen von Gras, weist einen an einem Fahrzeug anbringbaren oder angebrachten Ausleger, einen an dem Ausleger um eine Schwenkachse schwenkbar gelagerten und mehrere Arme umfassenden Träger, an denen mehrere Schneidwerkzeuge befestigt sind, wobei zwischen zwei vorderen der Schneidwerkzeuge ein Freiraum vorgesehen ist, in den ein bodenfestes Hindernis einlaufen kann, wenigsten einen Antrieb, mittels welchem die Schneidwerkzeuge angetrieben werden oder werden können, eine im Bereich der Schwenkachse und in Mährichtung hinter einem ersten der vorderen Schneidwerkzeuge angeordnete Bodenabstützung, mittels welcher der Ausleger am Boden abgestützt ist oder werden kann, und eine am Ausleger um die Schwenkachse drehbar gelagerte Welle auf, mittels welcher der Träger schwenkbar an dem Ausleger gelagert ist, wobei die Bodenabstützung am unteren Ende der Welle drehbar gelagert ist. Die Bodenabstützung ist bevorzugt unterhalb des Trägers, insbesondere zwischen dem Träger und dem Boden, angeordnet und steht vorzugsweise auf dem Boden auf. Das Fahrzeug ist bevorzugt ein Kraftfahrzeug. Ferner ist der Ausleger insbesondere schwenkbar am Fahrzeug anbringbar oder angebracht. Bevorzugt ist die Schwenkachse, um welche der Träger schwenken kann, vertikal oder im Wesentlichen vertikal ausgerichtet. Insbesondere schneidet die Schwenkachse oder eine Gerade, auf welcher die Schwenkachse liegt, die Bodenabstützung.

Durch das Abstützen des Auslegers mittels der Bodenabstützung auf dem Boden kann zwischen dem Boden und den Schneidwerkzeugen ein konstanter Abstand aufrechterhalten werden, der insbesondere durch den Abstand zwischen der dem Ausleger abgewandten Bodenauflagefläche der Bodenabstützung und dem Ausleger bestimmt ist. Da der Ausleger vorzugsweise um eine horizontale Schwenkachse schwenkbar an dem Fahrzeug anbringbar oder angebracht ist, kann der Ausleger einem variierenden Niveau des Bodens am Ort der Bodenabstützung folgen. Zusätzlich zu dem bloßen Vorsehen der Bodenabstützung ist aber noch berücksichtigt, dass die Bodenabstützung in Mährichtung hinter einem ersten der vorderen Schneidwerkzeuge angeordnet ist. Hierdurch wird erreicht, dass die Bodenabstützung über Gras gleitet, das bereits von dem ersten vorderen Schneidwerkzeug gemäht worden ist. Wird dieses Merkmal nicht beachtet und gleitet die Bodenabstützung auf ungemähtem Gras, so wird dieses durch die Bodenabstützung umgelegt und kann von einem nachfolgenden Schneidwerkzeug nicht mehr im gewünschten Umfang abgeschnitten werden, da das umgelegte Gras eine gewisse Zeit benötigt, bis es sich wieder aufrichtet. Ferner ist die Bodenabstützung im Bereich der Schwenkachse angeordnet, also dort, wo der Träger mit den Schneidwerkzeugen am Ausleger befestigt ist. Ohne Bodenabstützung würden in diesem Bereich die Gewichtskräfte des Trägers und der Schneidwerkzeuge an dem Ausleger angreifen und diesen stark belasten. Die Erfindung geht somit über das bloße Vorsehen einer Bodenabstützung hinaus.

Der Ausleger ist mittels der Bodenabstützung insbesondere gleitfähig am Boden abgestützt oder abstützbar. Bevorzugt ist die Bodenabstützung auf ihrer dem Träger abgewandten Seite konvex ausgebildet und insbesondere um die Schwenkachse drehbar gelagert. Hierdurch kann eine geringe Reibung zwischen der Bodenabstützung und der Grasnarbe des Bodens erzielt werden, sodass diese nichtbeschädigt wird.

Gemäß der Erfindung ist am Ausleger die Welle um die Schwenkachse drehbar gelagert, wobei der Träger mittels der Welle drehbar am Ausleger gelagert ist. Ferner ist die Bodenabstützung am unteren Ende der Welle drehbar gelagert. Dreht sich der Träger mit der Welle relativ zum Ausleger, so ist die Bodenabstützung wegen ihrer drehbaren Lagerung nicht gezwungen, dieser Drehbewegung zu folgen. Hierdurch wird die Reibung der Bodenabstützung am Boden verringert und somit, wie oben bereits angesprochen, die Grasnarbe des Bodens geschont. Bevorzugt ist die Bodenabstützung am unteren Ende der Welle angeordnet.

Gemäß einer Ausgestaltung der Erfindung ist das erste vordere Schneidwerkzeug an einem ersten der Arme und das andere vordere Schneidwerkzeug an einem zweiten der Arme befestigt, an dem in Mährichtung hinter der Bodenabstützung bevorzugt ein hinteres Schneidwerkzeug befestigt ist. Somit sind vorzugsweise drei oder wenigstens drei Schneidwerkzeuge vorgesehen, die insbesondere auf den Ecken eines Dreiecks angeordnet sind.

Jedes der Schneidwerkzeuge weist bevorzugt wenigstens ein um eine Messerachse drehbares Schneidmittel auf, mittels welchem Gras oder dergleichen geschnitten werden kann. Insbesondere umfassen die Schneidmittel jeweils wenigstens ein Messer oder wenigstens eine Schnur. Die Schneidmittel können insbesondere mittels des Antriebs in Drehung um die jeweilige Messerachse versetzt werden. Die Messerachsen sind bevorzugt vertikal oder im Wesentlichen vertikal ausgerichtet.

An dem Träger und/oder an den Schneidwerkzeugen sind vorzugsweise ein oder mehrere Abweiser vorgesehen, die verhindern, dass die Schneidmittel der Schneidwerkzeuge in Kontakt mit dem oder einem Hindernis treten können. Hierdurch werden sowohl das Hindernis als auch die Schneidmittel geschützt.

Bevorzugt ist an dem Ausleger wenigstens eine Riemenscheibe um die Schwenkachse drehbar gelagert, wobei die Riemenscheibe über Riemen mit dem Antrieb und mit den Schneidwerkzeugen gekoppelt ist. Die Riemenscheibe ist insbesondere als Mehrfachriemenscheibe ausgebildet. Die Schneidwerkzeuge sind somit bevorzugt über einen oder mehrere Riementriebe mit dem Antrieb gekoppelt, sodass nur ein Antrieb zum Antreiben der Schneidwerkzeuge erforderlich ist. Ferner lassen sich mit Riementrieben auf einfache Weise größere Abstände zwischen Riemenscheibe und Schneidwerkzeugen überbrücken.

Die erfindungsgemäße Mährvorrichtung zeichnet sich insbesondere dadurch aus, dass mit ihr ein bodenfestes Hindernis, wie z.B. ein Zaunpfahl, ein Leitpfosten oder dergleichen ummäht werden kann. Hierzu ist der Träger um die Schwenkachse drehbar am Ausleger gelagert, wobei die Schwenkachse insbesondere vertikal verläuft. Die Hindernisse können aber unterschiedliche Abmessungen aufweisen, sodass der Fall eintreten kann, dass ein Hindernis nicht in den Freiraum hineinpasst. Bevorzugt können somit die Arme unter Aufweitung des Freiraums auseinander geschwenkt werden. Somit ist es möglich, dass auch ein Hindernis mit größeren Abmessungen in den Freiraum einlaufen kann.

Die Arme können insbesondere gegen Federkraft auseinander schwenken, sodass sie nach dem Austritt des Hindernisses aus dem Freiraum wieder ihren ursprünglichen Abstand zueinander einnehmen können. Ist kein Hindernis im Freiraum vorhanden oder erlauben es die Abmessungen des Hindernisses, dass ein Auseinanderschwenken der Arme nicht erforderlich ist, so werden die Arme durch die Federkraft vorzugsweise gegen einen Anschlag gedrängt, der insbesondere am Träger und/oder am Ausleger befestigt oder vorgesehen ist. Ferner bewirkt die Federkraft, dass die Arme während des Ummähens des Hindernisses einen möglichst geringen Abstand zu dem Hindernis aufweisen, sodass bis nah an das Hindernis heran gemäht werden kann. Die Federkraft wird bevorzugt durch ein oder mehrere Federn aufgebracht, die insbesondere am Träger und/oder am Ausleger befestigt ist bzw. sind. Die Arme sind bevorzugt um eine Achse (Armschwenkachse) auseinander schwenkbar, die insbesondere vertikal oder im Wesentlichen vertikal ausgerichtet ist und bevorzugt mit der Schwenkachse zusammenfällt, um welche der Träger schwenkbar ist.

Gemäß einer Ausgestaltung der Erfindung ist ein Stellantrieb vorgesehen, mittels welchem der Träger um die Schwenkachse gedreht werden kann. Bevorzugt ist eine mit dem Stellantrieb gekoppelte Erfassungseinrichtung vorgesehen, mittels der ein oder das in den Freiraum einlaufende Hindernis erfasst und der Stellantrieb zum Drehen des Trägers angesteuert oder aktiviert wird oder werden kann. Es ist somit möglich, den Träger mittels des Stellantriebs aktiv zu drehen, sobald das Hindernis in den Freiraum eindringt. Dies hat gegenüber herkömmlichen Mähvorrichtungen mit passiver Schneidwerkzeugdrehung den Vorteil, dass das Hindernis enger ummäht werden kann. Diese Ausgestaltung ist grundsätzlich auch ohne die Bodenabstützung realisierbar, vorzugsweise aber mit dieser kombiniert.

Bevorzugt kann der Stellantrieb den Träger in beide Richtungen um die Schwenkachse drehen, sodass der Träger nach einer Drehung wieder zurückgedreht werden kann, vorzugsweise in seine Ausgangstellung vor der Drehung. Gemäß einer Ausgestaltung der Erfindung kann der Stellantrieb mittels der Erfassungseinrichtung zum Zurückdrehen des Trägers angesteuert oder aktiviert werden, insbesondere wenn das Hindernis nicht mehr von der Erfassungseinrichtung erfasst wird.

Die Erfassungseinrichtung umfasst bevorzugt einen bewegbar gelagerten Tastarm, der von dem einlaufenden Hindernis betätigt werden kann. Der Tastarm wird somit als mechanischer Auslöser verwendet, um die Drehung des Trägers mittels des Stellantriebs zu aktivieren. Insbesondere wird mittels des Tastarms ein Schalter betätigt, der ein elektrischer Schalter, ein hydraulischer Schalter, ein pneumatischer Schalter oder dergleichen sein kann. Der Tastarm ist insbesondere schwenkbar am Ausleger gelagert. Bevorzugt überstreicht oder unterstreicht der Tastarm den Freiraum oder ist in dem Freiraum angeordnet.

Der Stellantrieb umfasst gemäß einer Ausgestaltung der Erfindung wenigstens eine Kolben-Zylindereinheit, die insbesondere durch einen Hydraulik- oder Pneumatikzylinder gebildet ist. Bevorzugt ist mit der Welle ein Hebel starr oder drehfest gekoppelt, der mittels des Stellantriebes betätigt wird. Insbesondere ist die Kolben-Zylindereinheit zwischen den Hebel und den Ausleger geschaltet. Die Kolben-Zylindereinheit ist z.B. derart ausgelegt, dass der Kolben hydraulisch oder pneumatisch sowohl aus dem Zylinder ausgefahren als auch wieder in den Zylinder eingefahren werden kann. Somit ist ein Drehen und ein Zurückdrehen des Trägers mittels der Kolben-Zylindereinheit möglich. Alternativ kann eine Kolben-Zylindereinheit verwendet werden, bei der der Kolben hydraulisch oder pneumatisch lediglich in den Zylinder eingefahren oder aus diesem ausgefahren werden kann. In diesem Fall ist vorzugsweise zwischen den Hebel und den Ausleger eine Feder geschaltet, die der hydraulischen oder pneumatischen Betätigung der Kolben-Zylindereinheit entgegenwirkt. Somit ist es möglich, eine Kolben-Zylindereinheit zu verwenden, die lediglich ein Einfahren oder ein Ausfahren des Kolbens in den bzw. aus dem Zylinder unterstützt.

Der Antrieb kann ein elektrischer Antrieb oder ein pneumatischer Antrieb sein. Bevorzugt handelt es sich bei dem Antrieb aber um einen hydraulischen Antrieb, insbesondere um einen Hydraulikmotor. Der Hydraulikmotor wird bevorzugt mittels einer Hydraulikeinrichtung betrieben, die insbesondere am Fahrzeug vorgesehen ist. Handelt es sich bei dem Stellantrieb um einen hydraulischen Stellantrieb, so können sowohl der Stellantrieb als auch der Antrieb mittels derselben Hydraulikeinrichtung betrieben werden. Der Antrieb ist bevorzugt am Ausleger befestigt. Alternativ kann an jedem der Schneidwerkzeuge aber auch ein separater Antrieb sitzen.

Gemäß einer Ausgestaltung betrifft die Erfindung somit eine Mähvorrichtung zum Mähen von Gras um Hindernisse, wie Zaunpfählen, Straßenleitpfosten etc., wobei die Mähvorrichtung an einem Fahrzeug anbringbar ist. Sie besteht aus mehreren Schneidwerkzeugen, die von einem Antrieb angetrieben werden. Die Schneidwerkzeuge sind an einem Träger bestehend aus zwei Armen (Schwenkarmen) befestigt, der um eine vertikale Schwenkachse drehbar gelagert ist. Der Träger weist in Fahrt- oder Mährichtung eine Öffnung (Freiraum) auf, in die das Hindernis einläuft oder einlaufen kann. Beidseits der Öffnung ist an den Schwenkarmen jeweils ein vorderes Schneidwerkzeug angebracht. In Fahrtrichtung hinter der Öffnung ist ein weiteres Schneidwerkzeug an einem der Schwenkarme angebracht. Die Schwenkarme sind federnd miteinander verbunden und können bei Kontakt mit einem Hindernis, welches größer als die Öffnung ist, aufschwenken. Im weiteren Verlauf der Öffnung ist ein Tastarm vorgesehen, der bei Kontakt mit dem Hindernis eine Drehung des Trägers mittels eines Stellantriebs einleitet, sodass das Hindernis von allen Seiten gemäht wird, während das Fahrzeug in Fahrtrichtung weiterfährt. Die Drehung des Trägers erfolgt z.B. um 200°. Nach der Drehung wird der Träger wieder zurück gedreht. Unterhalb der vertikalen Schwenkachse ist eine Bodenabstützung drehbar angebracht, auf der sich der Träger und/oder der Ausleger gegenüber dem Boden während der Fahrt abstützt.

Der Begriff vertikal bezeichnet bevorzugt eine Richtung, die senkrecht oder im Wesentlichen senkrecht zum Boden verläuft. Ferner bezeichnet der Begriff horizontal bevorzugt eine Richtung, die parallel oder im Wesentlichen parallel zum Boden verläuft. Die Mährichtung ist insbesondere diejenige Richtung, in welche die Mähvorrichtung und/oder der Ausleger zum Mähen entlang des Bodens bewegt wird. Die Mährichtung fällt bevorzugt mit der Fahrtrichtung des Fahrzeugs zusammen. Unter den Begriff "Einlaufen" im Zusammenhang mit dem Hindernis und dem Freiraum ist insbesondere zu verstehen, dass die Mähvorrichtung auf das Hindernis zu bewegt wird, sodass das Hindernis in den Freiraum eintritt.

Die Erfindung betrifft ferner ein Fahrzeug mit einer erfindungsgemäßen Mähvorrichtung sowie die Verwendung einer erfindungsgemäßen Mähvorrichtung zum Mähen von Gras.

Die Erfindung wird nachfolgend anhand einer bevorzugten Ausführungsform unter Bezugnahme auf die Zeichnung beschrieben. In der Zeichnung zeigen:
- Fig. 1: eine Draufsicht auf eine Mähvorrichtung gemäß einer Ausführungsform der Erfindung vor einem Hindernis,
- Fig. 2: eine Draufsicht auf die Mähvorrichtung während des Ummähens des Hindernisses,
- Fig. 3: eine Draufsicht auf die Mähvorrichtung während des Freigebens des Hindernisses und
- Fig. 4: eine Vorderansicht der Mähvorrichtung.

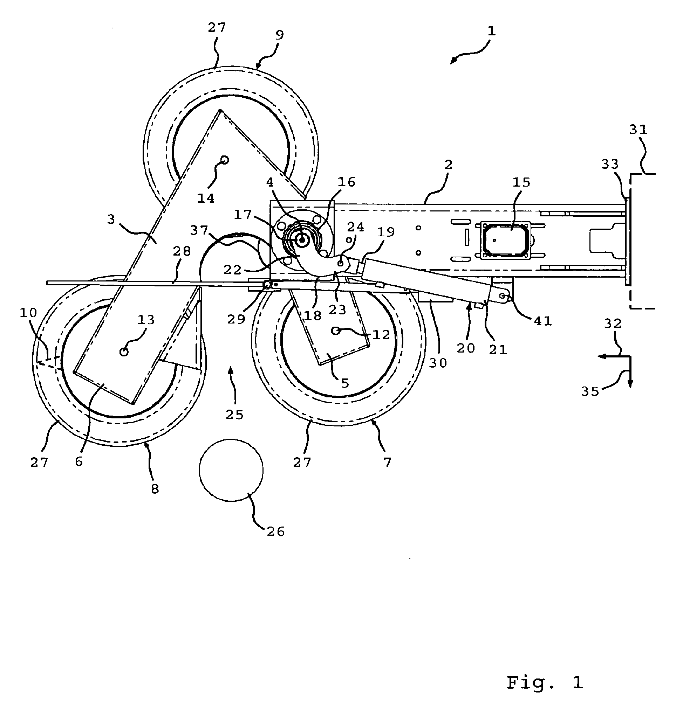

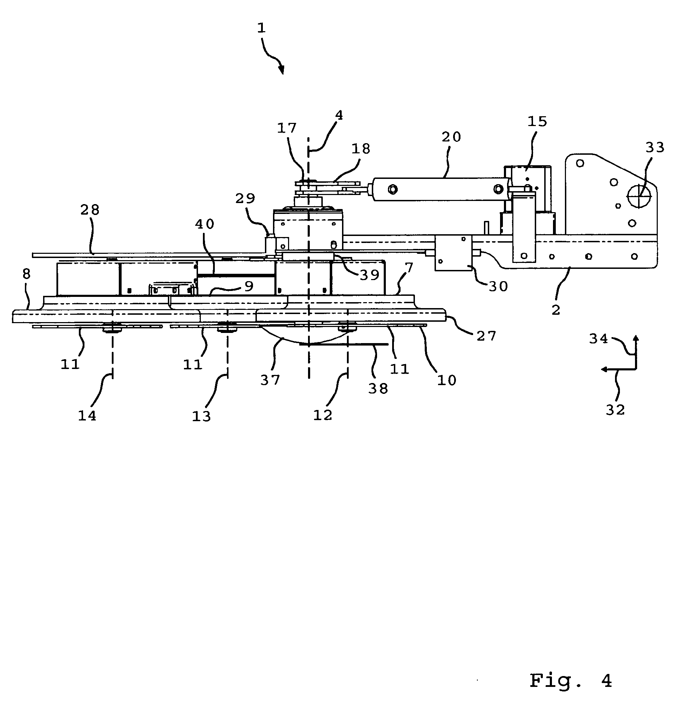

Aus Fig. 1 ist eine Draufsicht auf eine Mähvorrichtung 1 gemäß einer Ausführungsform der Erfindung ersichtlich, wobei die Mähvorrichtung 1 einen Ausleger 2 aufweist, an dem ein Träger 3 um eine Schwenkachse 4 drehbar gelagert ist, die sich in die Blattebene hinein erstreckt. Der Träger umfasst zwei Arme 5 und 6, an denen Schneidwerkzeuge 7, 8 und 9 befestigt sind. Dabei ist das Schneidwerkzeug 7 am Arm 5 befestigt, wohingegen die Schneidwerkzeuge 8 und 9 am Arm 6 befestigt sind. Jedes der Schneidwerkzeuge weist mehrere Messer 10 auf, die an einer drehbar an dem jeweiligen Arm gelagerten Messerscheibe 11 (siehe Fig. 4) vorgesehen sind. Dabei ist die Messerscheibe 11 des Schneidwerkzeugs 7 um eine Achse 12, die Messerscheibe 11 des Schneidwerkzeugs 8 um eine Achse 13 und die Messerscheibe 11 des Schneidwerkzeugs 9 um eine Achse 14 drehbar. Die Achsen 12, 13 und 14 erstrecken sich in die Blattebene hinein. Die Messerscheiben 11 werden mittels eines Antriebs 15 gedreht, der als Hydraulikmotor ausgebildet und über Riemen mit den Scheiben 11 gekoppelt ist.

An dem Ausleger 2 ist mittels wenigstens eines Wälzlagers 16 eine Welle 17 um die Schwenkachse 4 drehbar gelagert, wobei der Träger 3 mittels der Welle 17 um die Schwenkachse 4 schwenkbar an dem Ausleger 2 gelagert ist. Mit der Welle 17 ist ein Hebel 18 drehfest verbunden, der mit einer Kolbenstange 19 eines Hydraulikzylinders 20 verbunden ist, dessen Zylinder 21 mit dem Ausleger 2 verbunden ist. Der Hebel 18 ist L-förmig ausgebildet, wobei ein erster Schenkel 22 des Hebels 18 drehfest mit der Welle 17 und ein zweiter Schenkel 23 des Hebels 18 mittels eines Gelenks 24 gelenkig mit der Kolbenstange 19 verbunden ist. Der Zylinder 21 ist mittels eines Gelenks 41 mit dem Ausleger 2 verbunden.

Zwischen den beiden Schneidwerkzeugen 7 und 8 ist ein Freiraum 25 vorgesehen, in den ein Hindernis 26 einlaufen kann. Da die lateralen Abmessungen des Hindernisses 26 größer sind als der lichte Abstand zwischen den beiden Schneidwerkzeugen 7 und 8, können die beiden Arme 5 und 6 unter Aufweitung des Freiraums 25 auseinander schwenken. Das Auseinanderschenken erfolgt gegen Federkraft, sodass die Arme 5 und 6 während des Einlaufens des Hindernisses 26 in den Freiraum 25 gegen das Hindernis 26 drängen. Damit die Messer 10 dabei nicht gegen das Hindernis 26 stoßen, sind die Schneidwerkzeuge 7, 8 und 9 von an dem Träger 3 befestigten Abweisern 27 geschützt, die derart ausgebildet sind, dass die Messer 10 nicht über sie hinausreichen.

Ein den Freiraum 25 überstreichender Tastarm 28 ist mittels eines Scharniers 29 schwenkbar am Ausleger 2 gelagert, wobei sich die Scharnierachse in die Blattebene hineinerstreckt. Der Tastarm 28 ist mechanisch mit einem Steuerventil 30 gekoppelt, welches zur Steuerung des Hydraulikzylinders 20 dient.

Der Ausleger 2 ist an einem schematisch dargestellten Kraftfahrzeug 31 angebracht und erstreckt sich von diesem in Querrichtung 32 weg. Der Ausleger 2 ist um eine horizontale Schwenkachse 33 an dem Fahrzeug 31 gelagert, sodass der Schwenkarm 2 in vertikaler Richtung 34 (siehe Fig. 4) um die Schwenkachse 33 auf und nieder schwenken kann. Das Fahrzeug 31 bewegt sich oder fährt in Richtung 35, die auch als Fahrtrichtung oder Mährichtung bezeichnet wird.

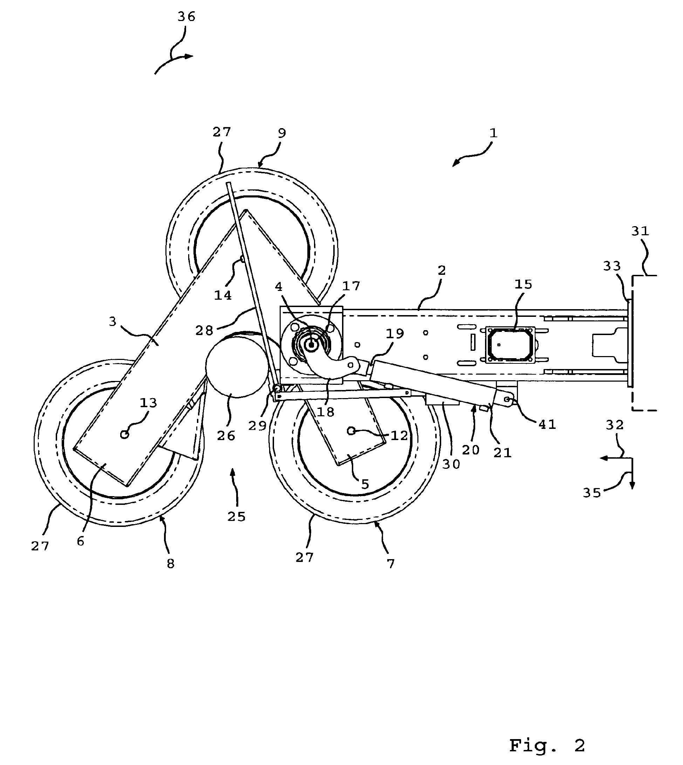

Aus Fig. 2 ist eine Draufsicht auf die Mähvorrichtung 1 ersichtlich, wobei das Hindernis 26 in den Freiraum 25 eingelaufen ist. Es ist zu erkennen, dass die Arme 5 und 6 unter Aufweitung des Freiraums 25 auseinandergeschwenkt sind. Ferner ist zu erkennen, dass der Tastarm 28 von dem Hindernis 26 um die Achse des Scharniers 29 geschwenkt worden ist. Der geschwenkte Tastarm 28 betätigt das Steuerventil 30, sodass eine Drehbewegung des Trägers 3 um die Schwenkachse 4 eingeleitet wird. Diese Drehung erfolgt in Richtung des Pfeils 36 und wird aktiv durch den Hydraulikzylinder 20 herbeigeführt. Alternativ könnte die Drehung auch durch eine Feder hervorgerufen werden, wobei der geschwenkte Tastarm eine die Drehbewegung des Trägers blockierende Sperre entriegelt.

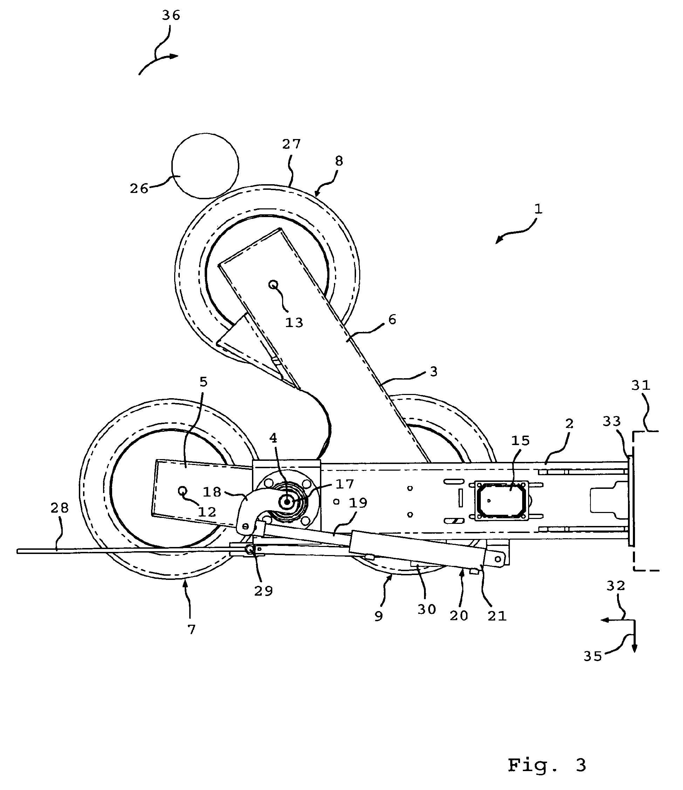

Aus Fig. 3 ist eine Draufsicht auf die Mähvorrichtung 1 ersichtlich, wobei das Hindernis 26 von dem Träger 3 freigegeben wird. Der federbelastete Tastarm 28 ist in seine Ruheposition zurückgekehrt und hat dabei auch das Steuerventil 30 in seine Ausgangsposition zurückgestellt. Hierdurch wird der Hydraulikzylinder 20 mit Hydraulikflüssigkeit beaufschlagt und drängt den Träger 3 in Gegenrichtung zum Pfeil 36 zurück in seine aus Fig. 1 ersichtliche Ausgangsposition. Ein Zurückdrehen des Trägers 3 in seine Ausgangsposition ist allerdings erst möglich, sobald das Hindernis 26 nicht mehr an dem Abweiser 27 anliegt und das Zurückdrehen blockiert.

Aus Fig. 4 ist eine Vorderansicht der Mähvorrichtung 1 ersichtlich, wobei am unteren Ende der Welle 17 eine Bodenabstützung 37 um die Schwenkachse 4 drehbar an der Welle 17 gelagert ist und auf dem Boden 38 aufsteht. Die Bodenabstützung 37 ist zum Boden 38 hin konvex ausgebildet und stützt den Ausleger 2 zusammen mit dem Träger 3 und den Schneidwerkzeugen 7, 8 und 9 am Boden 38 ab. Ferner ist eine Riemenscheibe 39 dargestellt, die um die Schwenkachse 4 drehbar am Ausleger 2 gelagert ist. Die Riemenscheibe 39 ist über Riemen 40 sowohl mit den Messerscheiben 11 als auch mit dem Antrieb 15 gekoppelt, sodass die Schneidwerkzeuge 7, 8 und 9 mittels des Antriebs 15 angetrieben werden können.

### Bezugszeichenliste

- 1: Mähvorrichtung
- 2: Ausleger
- 3: Träger
- 4: Schwenkachse
- 5: Arm
- 6: Arm
- 7: Schneidwerkzeug
- 8: Schneidwerkzeug
- 9: Schneidwerkzeug
- 10: Messer
- 11: Messerscheibe
- 12: Drehachse
- 13: Drehachse
- 14: Drehachse
- 15: Antrieb
- 16: Wälzlager
- 17: Welle
- 18: Hebel
- 19: Kolbenstange
- 20: Hydraulikzylinder
- 21: Zylinder
- 22: Schenkel
- 23: Schenkel
- 24: Gelenk
- 25: Freiraum
- 26: Hindernis
- 27: Abweiser
- 28: Tastarm
- 29: Scharnier
- 30: Ventil
- 31: Fahrzeug
- 32: Querrichtung
- 33: Schwenkachse
- 34: vertikale Richtung
- 35: Fahrtrichtung / Mährichtung
- 36: Drehrichtung
- 37: Bodenabstützung
- 38: Boden
- 39: Riemenscheibe
- 40: Riemen
- 41: Gelenk

## Patentansprüche

1. Mähvorrichtung mit
einem an einem Fahrzeug (31) anbringbaren oder angebrachten Ausleger (2),
einem an dem Ausleger (2) um eine Schwenkachse (4) schwenkbar gelagerten und mehrere Arme (5, 6) umfassenden Träger (3), an denen mehrere Schneidwerkzeuge (7, 8, 9) befestigt sind, wobei zwischen zwei vorderen der Schneidwerkzeuge (7, 8) ein Freiraum (25) vorgesehen ist, in den ein bodenfestes Hindernis (26) einlaufen kann,
wenigsten einem Antrieb (15), mittels welchem die Schneidwerkzeuge (7, 8, 9) angetrieben werden oder werden können,
einer im Bereich der Schwenkachse (4) und in Mährichtung (35) hinter einem ersten der vorderen Schneidwerkzeuge (7) angeordneten Bodenabstützung (37), mittels welcher der Ausleger (2) am Boden (38) abgestützt ist oder werden kann, **gekennzeichnet durch**
eine am Ausleger (2) um die Schwenkachse (4) drehbar gelagerten Welle (17), mittels welcher der Träger (3) schwenkbar an dem Ausleger (2) gelagert ist, wobei die Bodenabstützung (37) am unteren Ende der Welle (17) drehbar gelagert ist.

2. Mähvorrichtung nach Anspruch 1,
**dadurch gekennzeichnet, dass**
die Bodenabstützung (37) auf ihrer dem Träger (3) abgewandten Seite konvex ausgebildet und um die Schwenkachse (4) drehbar gelagert ist.

3. Mähvorrichtung nach einem der vorangehenden Ansprüche,
**dadurch gekennzeichnet, dass**
das erste vordere Schneidwerkzeug (7) an einem ersten der Arme (5) und das andere vordere Schneidwerkzeug (8) an einem zweiten der Arme (6) befestigt ist, an dem in Mährichtung (35) hinter der Bodenabstützung (37) ein hinteres Schneidwerkzeug (9) befestigt ist.

4. Mähvorrichtung nach einem der vorangehenden Ansprüche,
**dadurch gekennzeichnet, dass**
insgesamt drei Schneidwerkzeuge (7, 8, 9) vorgesehen und auf den Ecken eines Dreiecks angeordnet sind.

5. Mähvorrichtung nach einem der vorangehenden Ansprüche,
**gekennzeichnet durch**
eine um die Schwenkachse (4) drehbar gelagerte Riemenscheibe (39), die über Riemen (40) mit dem Antrieb (15) und mit den Schneidwerkzeugen (7, 8, 9) gekoppelt ist.

6. Mähvorrichtung nach einem der vorangehenden Ansprüche,
**dadurch gekennzeichnet, dass**
die Arme (5, 6) unter Aufweitung des Freiraums (25) gegen Federkraft auseinander geschwenkt werden können.

7. Mähvorrichtung nach einem der vorangehenden Ansprüche,
**gekennzeichnet durch**
einen Stellantrieb (20), mittels welchem der Träger (3) um die Schwenkachse (4) aktiv drehbar ist,
einer mit dem Stellantrieb (4) gekoppelten Erfassungseinrichtung (28, 29, 30), mittels welcher das in den Freiraum (25) einlaufende Hindernis (26) erfasst und der Stellantrieb (20) zum Drehen des Trägers (3) aktiviert werden kann.

8. Mähvorrichtung nach Anspruch 7,
**dadurch gekennzeichnet, dass**
die Erfassungseinrichtung einen schwenkbar gelagerten Tastarm (28) umfasst, der von dem in den Freiraum (25) einlaufenden Hindernis (26) betätigt werden kann.

9. Mähvorrichtung nach Anspruch 7 oder 8,
**dadurch gekennzeichnet, dass**
mit der Welle (17) ein Hebel (18) drehfest gekoppelt ist,
der Stellantrieb (20) wenigstens eine Kolben-Zylindereinheit (19, 21) umfasst, die zwischen den Hebel (18) und den Ausleger (2) geschaltet ist.

10. Mähvorrichtung nach Anspruch 9,
**dadurch gekennzeichnet,**
**dass** die Kolben-Zylindereinheit (19, 21) ein Hydraulikzylinder ist.

11. Mähvorrichtung nach einem der vorangehenden Ansprüche,
**dadurch gekennzeichnet, dass**
die Bodenabstützung (37) unterhalb des Trägers (3) angeordnet ist.

## Claims

1. Mowing device with
a boom (2) which can be attached to or mounted on a vehicle (31),
a support (3), pivotally mounted on the boom (2) about a pivot axis (4) and comprising a plurality of arms (5, 6), to which a plurality of cutting tools (7, 8, 9) are secured, wherein a space (25) is provided between two of the forward cutting tools (7, 8), into which an obstacle (26) fixed in the ground can run,
at least one drive (15), by means of which the cutting tools (7, 8, 9) are driven or can be driven,
a ground support (37) arranged in the area of the pivot axis (4) and in the direction of mowing (35) behind a first one of the front cutting tools (7), by means of which the boom (2) is or can be supported on the ground (38), **characterised in that**
a shaft (17), rotatable on the boom (2) about the pivot axis (4), by means of which the support (3) is pivotally mounted on the boom (2), wherein the ground support (37) is rotatably mounted at the lower end of the shaft (17).

2. Mowing device according to claim 1,
**characterised in that**
the ground support (37) is designed convex on its side facing away from the support (3), and rotatably mounted about the pivot axis (4).

3. Mowing device according to any one of the preceding claims,
**characterised in that**
the first front cutting tool (7) is secured to a first of the arms (5), and the other front cutting tool (8) is secured to a second of the arms (6), to which a rear cutting tool (9) is secured, behind the ground support (37) in the direction of mowing.

4. Mowing device according to any one of the preceding claims,
**characterised in that**
a total of three cutting tools (7, 8, 9) are provided and are arranged on the corners of a triangle.

5. Mowing device according to any one of the preceding claims,
**characterised in that**
a pulley (39), rotatably mounted about the pivot axis (4), is connected by belts (40) to the drive (15) and to the cutting tools (7, 8, 9).

6. Mowing device according to any one of the preceding claims,
**characterised in that**
the arms (5, 6) can be pivoted out from one another by widening the space (25) against spring force.

7. Mowing device according to any one of the preceding claims,
**characterised by**
an actuating drive (20), by means of which the support (3) can be actively rotated about the pivot axis (4),
a detection device (28, 29, 30), connected to the actuating drive (4), by means of which the obstacle (26) running into the space (25) can be detected, and the actuating drive (20) can be activated to turn the support (3).

8. Mowing device according to claim 7
**characterised in that**
the detection device comprises a sensor arm (28) which is pivotally mounted, which can be actuated by the obstacle (26) running into the space (25).

9. Mowing device according to claim 7 or 8
**characterised in that**
a lever (18) is connected to the shaft (17) in a rotationally-resistant manner, and the actuating drive (20) comprises at least one piston-cylinder unit (19, 21), which is located between the lever (18) and the boom (2).

10. Mowing device according to claim 9
**characterised in that**
the piston-cylinder unit (19, 21) is a hydraulic cylinder.

11. Mowing device according to any one of the preceding claims,
**characterised in that**
the ground support (37) is arranged underneath the support (3) .

## Revendications

1. Dispositif de tonte, comprenant :
une potence (2) à monter ou montée sur un véhicule (31),
un support (3) monté à pivotement sur la potence (2) autour d'un axe de pivotement (4) et comprenant plusieurs bras (5, 6), auxquels sont fixés plusieurs outils de coupe (7, 8, 9), un espace libre (25) étant prévu entre deux, outils de coupe (7, 8) antérieurs, dans lequel peut pénétrer un obstacle (26) du sol,
au moins un entraînement (15), au moyen duquel les outils de coupe (7, 8, 9) sont entraînés ou peuvent être entraînés,
un appui au sol (37) agencé dans la zone de l'axe de pivotement (4) et dans la direction de tonte (35) derrière un premier (7) des outils de coupe antérieurs, au moyen duquel la potence (2) est pressée ou peut être pressée sur le sol (38),
**caractérisé par**
un arbre (17) monté à rotation sur la potence (2) autour de l'axe de pivotement (4), au moyen duquel le support (3) est monté à pivotement sur la potence (2), l'appui au sol (37) étant monté à rotation sur l'extrémité inférieure de l'arbre (17).

2. Dispositif de tonte selon la revendication 1,
**caractérisé en ce que**
l'appui au sol (37) se présente sous une forme convexe sur son côté opposé au support (3) et est monté à rotation autour de l'axe de pivotement (4).

3. Dispositif de tonte selon l'une quelconque des revendications précédentes,
**caractérisé en ce que**
le premier outil de coupe antérieur (7) est fixé sur un premier des bras (5) et l'autre outil de coupe antérieur (8) est fixé sur un second des bras (6), sur lequel un outil de coupe arrière (9), est fixé selon la direction de tonte (35), derrière l'appui au sol (37).

4. Dispositif de tonte selon l'une quelconque des revendications précédentes,
**caractérisé en ce que**
il est prévu au total trois outils de coupe (7, 8, 9) qui sont agencés aux sommets d'un triangle.

5. Dispositif de tonte selon l'une quelconque des revendications précédentes,
**caractérisé par**
une poulie à courroie (39) montée à rotation autour de l'axe de pivotement (4), laquelle est couplée via une courroie (40) à l'entraînement (15) et aux outils de coupe (7, 8, 9).

6. Dispositif de tonte selon l'une quelconque des revendications précédentes,
**caractérisé en ce que**
les bras (5, 6) peuvent s'écarter l'un de l'autre par pivotement à l'encontre d'une force élastique, sous l'effet d'un élargissement de l'espace libre (25).

7. Dispositif de tonte selon l'une quelconque des revendications précédentes,
**caractérisé par**
un mécanisme de commande (20), au moyen duquel le support (3) peut être entraîné de façon active en rotation autour de l'axe de pivotement (4), et par un dispositif de détection (28, 29, 30) couplé au mécanisme de commande (4), au moyen duquel l'obstacle (26) pénétrant dans l'espace libre (25) est détecté et le mécanisme de commande (20) peut être activé pour faire tourner le support (3).

8. Dispositif de tonte selon la revendication 7,
**caractérisé en ce que**
le dispositif de détection comprend un bras palpeur (28) monté à pivotement, qui peut être actionné par l'obstacle (26) pénétrant dans l'espace libre (25).

9. Dispositif de tonte selon la revendication 7 ou 8,
**caractérisé en ce que**
un levier (18) est couplé solidaire en rotation à l'arbre (17), et **en ce que** le mécanisme de commande (20) comprend au moins une unité de piston et cylindre (19, 21), montée entre le levier (18) et la potence (2).

10. Dispositif de tonte selon la revendication 9,
**caractérisé en ce que**
l'unité de piston et cylindre (19, 21) est un cylindre hydraulique.

11. Dispositif de tonte selon l'une quelconque des revendications précédentes,
**caractérisé en ce que**
l'appui au sol (37) est agencé sous le support (3).
